# EUROPEAN PATENT SPECIFICATION

(11) **EP 2 946 958 B1**
(45) Date of publication and mention of the grant of the patent: **25.01.2017**
(21) Application number: 15736773.1
(22) Date of filing: 04.02.2015
(51) Int. Cl.: B60K 6/405, B60K 6/36, B60K 6/48, B60K 6/52, B60K 6/547, F16H 7/06, F16H 57/04, B60K 6/40

(54) **DRIVE DEVICE FOR HYBRID VEHICLE**
ANTRIEBSVORRICHTUNG FÜR EIN HYBRIDFAHRZEUG
DISPOSITIF D'ENTRAÎNEMENT POUR VÉHICULE HYBRIDE

(30) Priority: 04.02.2014 JP 2014019177
(43) Date of publication of application: 25.11.2015
(73) Proprietor: Suzuki Motor Corporation, Shizuoka 432-8611 (JP)
(72) Inventor: SARASHINA, Shumpei, Shizuoka, 432-8611 (JP)
(74) Representative: Fink Numrich
(86) International application number: PCT/JP2015/053037
(87) International publication number: WO 2015/119128

(56) References cited:
- EP-A1- 1 693 238
- EP-A2- 1 232 890
- WO-A1-2012/082063
- DE-A1-102006 002 235
- FR-A1- 2 772 675
- FR-A1- 2 896 455
- JP-A- 2005 126 021
- JP-A- 2007 203 999
- JP-A- 2007 203 999
- JP-A- 2012 153 361

## Description

### TECHNICAL FIELD

The present invention relates to a drive unit for a hybrid electric vehicle, and, more particularly, to a drive unit for a hybrid electric vehicle having multiple power sources including an internal combustion engine and a rotary electric machine.

### BACKGROUND ART

In general, hybrid electric vehicles include an internal combustion engine that can produce power by combustion of fuel and an electric motor, as a rotary electric machine, that can produce power by supply of electricity. Some hybrid electric vehicles are known, in which, without widely remodeling a drive unit in a vehicle using only an internal combustion engine for a power source, an electric motor is attached to this drive unit.

According to one described in, for example, JP 2005-126021 A, an engine and a transmission are mounted to the vehicle structure, and a differential device for distributing the power from the transmission to left and right traction wheels is arranged on a coupling section side of the transmission to the engine, where, in a drive unit with an electric motor for a hybrid electric vehicle, a casing (called "a second casing" below) housing a transmission mechanism (a speed reducer) is coupled to that side of a casing (called "a first casing" below) housing the differential device which is closer to the engine than the differential device is, and this transmission mechanism is coupled to a rotating member attached to a differential case of the differential device.

Moreover, the electric motor is attached to the upper surface of the first casing behind the engine and an upper part of the second casing protrudes upwards from the upper surface of the first casing. With regard to this drive unit, power of the electric motor is transmitted through the transmission mechanism to the rotating member and then the power is transmitted from the rotating member to the left and right traction wheels through the differential device.

By configuring a drive unit for a hybrid electric vehicle as just described, without widely remodeling a conventional drive unit of a vehicle using an internal combustion engine for a power source, the conventional drive unit may be easily diverted to a drive unit for a hybrid electric vehicle.
JP 2007-203999 A discloses a drive unit for a hybrid electric vehicle, said drive unit including: a transmission which is adapted to change the speed of rotation from an internal combustion engine; a differential device having a final driven gear to which power from the transmission is transmitted and distributing the power from the transmission to left and right drive axles; a transmission case having a transmission housing part which houses the transmission and a differential housing part which is disposed behind, with respect to a forward direction of the vehicle, the transmission housing part and which houses the differential device, and adapted to be located in front, with respect to the forward direction of the vehicle, of a dash panel and connected to that one end of the internal combustion engine which faces in a transverse direction of the vehicle; a rotary electric machine provided around the outer periphery of the transmission case; a speed reducer which is housed in a speed reducer case attached to the outer periphery of the transmission case and which transmits power from the rotary electric machine to the final driven gear; an output gear housed in the differential housing part and meshing with the final driven gear, and which is connectable to the output shaft of the speed reducer. A sidewall of the transmission case has an opening through which the output shaft of the speed reducer extends. The speed reducer case is attached to the sidewall of the transmission case.

### SUMMARY OF INVENTION

### PROBLEM TO BE SOLVED BY INVENTION

In such conventional drive unit for hybrid electric vehicle, however, the electric motor is provided on the upper portion of the first casing behind the engine. For this, with such conventional drive unit for a hybrid electric vehicle, the electric motor may interfere with a certain on-board component (for example, a Master Vac brake booster) on the dash panel of a vehicle, causing deterioration in installing the drive unit.

Additionally, if such on-board components as a transmission operating device, a gear shifting device and the like are provided in the proximity of the upper surface of the first casing, the electric motor is provided on the upper surface of the first casing and the upper part of the second casing is located above the upper surface of the first casing. In this case, the installation space for the on-board components is reduced in the proximity of the first casing. This requires a need for alteration in layout of the on-board components to be installed in the proximity of the upper surface of the first casing. As a result, with regard to the conventional drive unit for hybrid electric vehicle, a conventional drive unit for a vehicle powered only by an internal combustion engine will have an increased number of portions to be remodeled, and thus diverting the conventional drive unit into a drive unit for a hybrid electric vehicle may not be considered easy.

Additionally, in the conventional drive unit for hybrid electric vehicle, an output shaft of the transmission mechanism is attached to a part of the differential case (an input member) which protrudes outwards from an opening of the first casing. For this reason, if the second casing which houses the transmission mechanism is removed from the first casing with an intention to change the drive unit to that for a non-hybrid vehicle, that part of the differential case which the output shaft of the transmission mechanism is attached to is left as it protrudes outwards from the first casing. This necessitates a cover which closes the opening in such a way as to cover a portion of the differential case. As such, the drive unit becomes greater in size if applied to a non-hybrid vehicle, causing deterioration in installing the drive unit if applied to the non-hybrid vehicle.

The present invention has focused on the problems mentioned above and aims to provide a drive unit for a hybrid which enables installation of a rotary electric machine without significantly remodeling an existing drive unit and improvement in installation to the vehicle in each of one case when the drive unit is to be applied to a hybrid electric vehicle and the other case when the drive unit is to be applied to a non-hybrid vehicle.

### MEANS TO SOLVE PROBLEM

As a first aspect of the present invention, a drive unit for a hybrid electric vehicle, the drive unit including a transmission which is adapted to change the speed of rotation from an internal combustion engine, a differential device having a final driven gear to which power from the transmission is transmitted and distributing the power from the transmission to left and right drive axles, a transmission case having a transmission housing part which houses the transmission and a differential housing part which is disposed behind, with respect to a forward direction of the vehicle, the transmission housing part and houses the differential device, and adapted to be located in front, with respect to the forward direction of the vehicle, of a dash panel and connected to that one end of the internal combustion engine which faces in a transverse direction of the vehicle, a rotary electric machine provided around the outer periphery of the transmission case, and a speed reducer which is housed in a speed reducer case attached to the outer periphery of the transmission case and transmits power from the rotary electric machine to the final driven gear, there is provided an output gear which is housed in the differential housing part in such a way that it is disposed in front, with respect to the forward direction of the vehicle, of the final driven gear and at a lower level, with respect to an upward direction of the vehicle, than the final driven gear is, which meshes with the final driven gear, and which is connectable to the output shaft of the speed reducer; that the rotary electric machine is provided around the outer periphery of the transmission case in such a way that it is disposed in front, with respect to the forward direction of the vehicle, of the differential housing part; and that, with respect to a transverse direction of the vehicle at the differential housing part, a sidewall of the transmission case on the side opposite from the one where the internal combustion engine is located has an opening through which the output shaft of the speed reducer extends and the speed reducer case is attached to the sidewall of the transmission case.

As a second aspect of the present invention, there may be provided a torque transfer case for four-wheel drive which transmits power from the differential device to a driven side drive axle assembly through a propeller shaft, and, with regard to sidewalls of the transmission case on one and the opposite sides, with respect to the transverse direction of the vehicle at the differential housing part, the torque transfer case may be connected to the sidewall of the transmission case on the side opposite from the one having the opening at a location behind, with respect to the forward direction of the vehicle, the internal combustion engine.

As a third aspect of the present invention, oil may be enclosed within each of the transmission case and the speed reducer case, and the oil level within the speed reducer case may be set lower than the oil level within the transmission case, and that an oil seal may be provided at the opening to block a flow of oil between the transmission case and the speed reducer case.

As a fourth aspect of the present invention, the speed reducer may include an input shaft connected to a rotating shaft of the rotary electric machine in such a way that it is coaxial with the rotating shaft of the rotary electric machine, an intermediate shaft connected to the input shaft through a first chain, and the output shaft connected to the intermediate shaft through a second chain, and the speed reducer case may be bent at a location where the intermediate shaft is.

### EFFECT OF INVENTION

Thus, according to the first aspect mentioned before, a drive unit includes a transmission case having a transmission housing part which houses the transmission and a differential housing part which houses the differential device, the transmission case being adapted to be connected to that one end of the internal combustion engine which faces in a transverse direction of the vehicle at a location in front of a dash panel with respect to the forward direction of the vehicle, and a rotary electric machine is attached to the outer periphery of the transmission case in such a way that it is at a location in front of the differential housing part with respect to the forward direction of the vehicle.

This prevents the rotary electric machine from interfering with an on-board component (for example, a Master Vac brake booster) on the dash panel of the vehicle, causing an improvement in installing the drive unit within the vehicle.

Moreover, with respect to a transverse direction of the vehicle at the differential housing part, a sidewall of the transmission case on the side opposite from the one where the internal combustion engine is located has an opening through which the output shaft of the speed reducer extends and the speed reducer case is attached to the sidewall of the transmission case, so that if, with respect to the transverse direction of the vehicle at the differential housing part, such on-board components as a torque transfer case, a propeller shaft and the like are installed on the transmission case from the side where the internal combustion engine is located, it is possible to install the speed reducer by getting round the space where such on-board components are installed.

In addition to that, installing the speed reducer and rotary electric machine to the upper surface of the transmission case is not allowed, so that it is possible to install the speed reducer to the transmission case by getting around such on-board components as a transmission operating device, a gear shifting device and the like which are provided in the proximity of the upper surface of the transmission case and attach the speed reducer and rotary electric machine to the transmission case without any change in the layout of such on-board components as a transmission operating device, a gear shifting device and the like. Therefore, this causes a more effective improvement in installing the drive unit to the vehicle.

In addition, if the drive unit is applied to a non-hybrid vehicle, the speed reducer and rotary electric machine may be easily removed from the transmission case by disengaging the output shaft of the speed reducer from the output gear meshing with the final driven gear and then pulling the output shaft out from the opening. Furthermore, it is no longer necessary to attach a large cover or the like to the outer periphery of the transmission case by closing the opening of the transmission case by a plug or the like. For this reason, the space for the speed reducer may be effectively used if the drive unit is installed to the vehicle.

As a result, this enables installation of the rotary electric machine without significantly remodeling an existing drive unit and improvement in installation of the drive unit to the vehicle in each of one case when applied to a hybrid electric vehicle and the other case when applied to a non-hybrid vehicle.

According to the second aspect mentioned before, with regard to sidewalls of the transmission case on one and the opposite sides, with respect to the transverse direction of the vehicle at the differential housing part, the torque transfer case is connected to the sidewall of the transmission case on the side opposite from the one having the opening at a location behind, with respect to the forward direction of the vehicle, the internal combustion engine, so that it is possible to install the speed reducer by getting around the space where such on-board components as the torque transfer case, propeller shaft and the like are installed. For this reason, the rotary electric machine may be attached to the transmission case, causing a more effective improvement in installing the drive unit to the vehicle.

According to the third aspect mentioned before, oil is enclosed within each of the transmission case and the speed reducer case, and the oil level within the speed reducer is set lower than the oil level within the transmission case, so that it is possible to reduce the stirring resistance due to stirring of oil by the speed reducer by lowering the oil level within the speed reducer case which houses the speed reducer.

Additionally, an oil seal is provided at the opening to block a flow of oil between the transmission case and the speed reducer case, so that it is possible to prevent the flow of oil between the transmission case and speed reducer case. This can prevent the stirring resistance by the speed reducer from increasing together with preventing a drop in lubricity in the transmission and that in the differential device caused by outflow of oil contained within the transmission case into the speed reducer case during turning of the vehicle.

According to the fourth aspect mentioned before, the speed reducer includes an input shaft connected to a rotating shaft of the rotary electric machine in such a way that it is coaxial with the rotating shaft of the rotary electric machine, an intermediate shaft connected to the input shaft through a first chain, and the output shaft connected to the intermediate shaft through a second chain, and the speed reducer case is bent at a location where the intermediate shaft is, thus allowing for compact installation of the speed reducer along the sidewall of the speed reducer case even if a path from the rotary electric machine to the final driven gear is long. This makes it unnecessary to change the layout of on-board components by avoiding a reduction in the installation space for such on-board components within the upper surface of the transmission case because the speed reducer does not protrude upwards from the upper surface of the transmission case as is conventionally done.

### BRIEF DESCRIPTION OF DRAWINGS

FIG. 1 is a view depicting one embodiment of a drive unit for a hybrid electric vehicle according to the present invention and side view of the drive unit.
FIG. 2 is a view depicting the one embodiment of drive unit for hybrid electric vehicle according to the present invention and cross section taken through the line A-A in FIG. 1.
FIG. 3 is a view depicting the one embodiment of drive unit for hybrid electric vehicle according to the present invention and side view of the drive unit indicating the oil level of oil contained in a transmission case and the oil level of oil contained in a speed reducer case.
FIG. 4 is a view depicting the one embodiment of drive unit for hybrid electric vehicle according to the present invention and side view of the drive unit with a speed reducer case and an electric motor removed.

### DESCRIPTION OF EMBODIMENT(S)

Referring to the drawings, the embodiment of drive unit for hybrid electric vehicle according to the present invention is explained below.

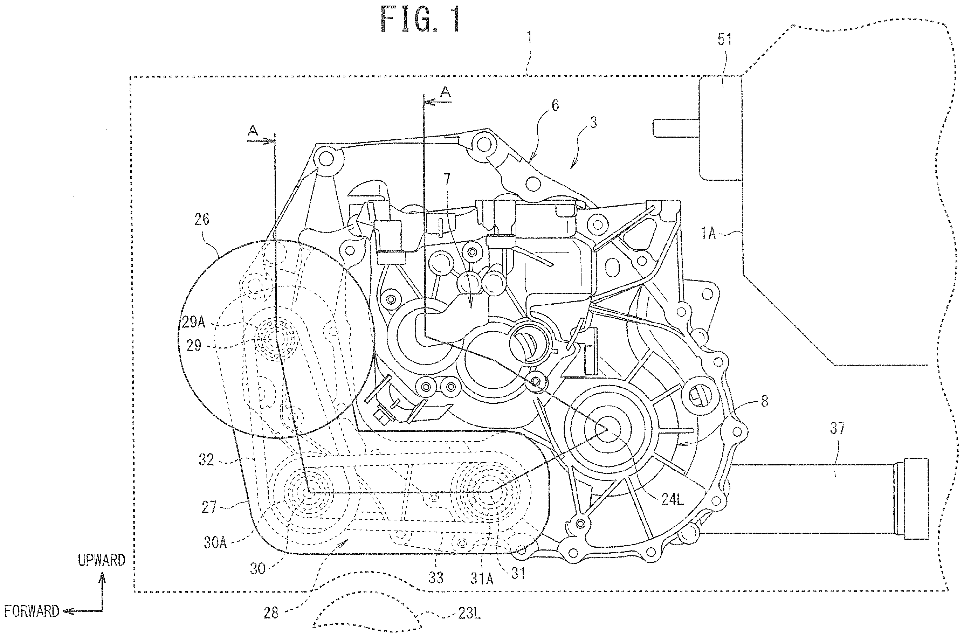

FIGS. 1 through 4 are views depicting the one embodiment of drive unit for hybrid electric vehicle according to the present invention.

First, its structure is explained.

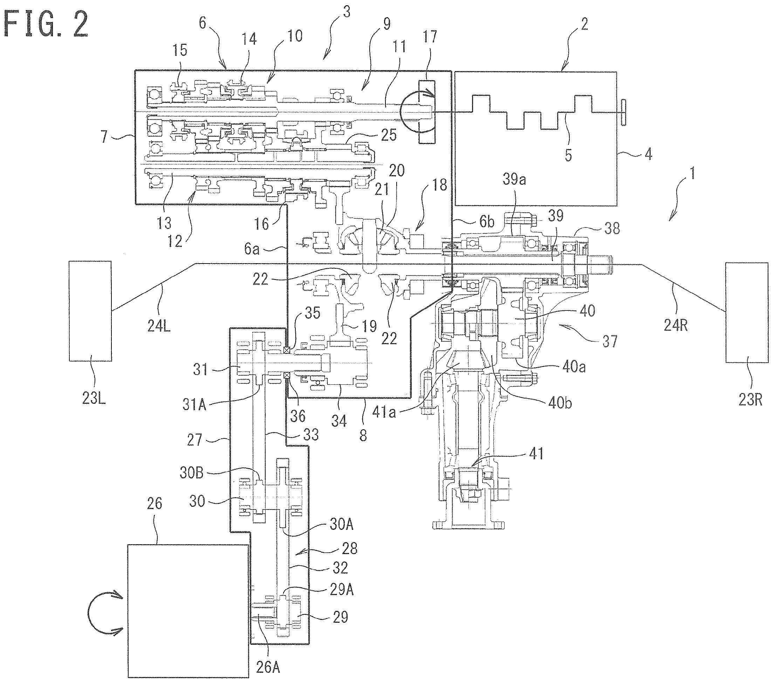

In FIGS. 1 and 2, a hybrid electric vehicle (simply called "a vehicle" below) 1 includes an engine 2 as an internal combustion engine and a drive unit 3.

Engine 2 has a crankshaft 5 rotatably disposed in the interior of an engine block 4. Crankshaft 5 is coupled to a plurality of (4 in the present embodiment) pistons through connecting rods in such a way as to convert the up-and-down movement of each piston, produced by burning of mixture initiated by ignition, into rotation. Additionally, engine 2 may be a gasoline engine or a diesel engine or the like, including but not limited to the plurality of cylinders.

Drive unit 3 includes a transmission case 6. This transmission case 6 has a transmission housing part 7 and a protruding differential housing part 8 behind, with respect to a forward direction of vehicle 1, (simply called "behind" below) transmission housing part 7 and it is adapted to be located in front, with respect to the forward direction of the vehicle, of (simply called "in front of" below) a dash panel 1A of vehicle 1 and connected to that one end or left end of the internal combustion engine which faces in a transverse direction of the vehicle. Transmission housing part 7 houses a transmission 9 adapted to change the speed of rotation of engine 2 or rotation of crankshaft 5.

Additionally, such an on-board component as a Master Vac brake booster 51 is attached to dash panel 1A. Master Vac brake booster 51 uses engine vacuum in intake engine vacuum from an intake pipe, not shown, and has a function to help give a brake pedal, not shown, some added force.

This transmission 9 includes an input shaft 11, with various gears 10, rotatably supported by transmission housing part 7 for connection coaxially to crankshaft 5 and a countershaft 13, with various gears 12, rotatably supported by transmission housing part 7 to extend in parallel to input shaft 11.

Moreover, transmission 9 includes, between selected gears 10, 12, a plurality of shift sleeves 14, 15 and 16, which can be moved by the gear shifting device including a shift and select shaft, a shift fork and the like.

This transmission 9 is configured to change speed of rotation of input shaft 11 or rotation of crankshaft 15 before transmitting to countershaft 13 by moving one of shift sleeves 14, 15 and 16 in either direction along the axis of the input shaft 11 or countershaft 13 to select a gear out of gears 10, 12 to be engaged when the gear shifting device is operated by the transmission operating device including a shift lever, not shown, manipulated by the driver and a shift cable and the like, not shown. It is to be noted that the gear shifting device and transmission operating device are provided on or in the proximity of the upper surface of transmission 6.

Furthermore, a clutch 17 is housed in transmission housing part 7 and this clutch 17 works to connect input shaft 11 to crankshaft 5 or disconnect the former from the latter depending on operation of the clutch pedal, not shown, in such a way as to transmit power of engine 2 to input shaft 11 or interrupt the transmission of power. It is to be noted that transmission housing part 7 includes sidewalls of transmission case 6 which enclose and define a space housing transmission 9.

Moreover, differential housing part 8 houses a differential device 18. Differential device 18 includes a differential case 20 with a final driven gear 19 attached to its outer periphery and integrally rotatable with final driven gear 19, a pair of pinion gears 21 (only one being shown) rotatably attached to differential case 20 and a pair of left and right side gears 22 meshing with pinion gears 21. Drive axles 24L, 24R, which run left and right and are coupled to left and right traction wheels 23L, 23R, are splined to side gears 22.

Furthermore, final driven gear 19 meshes with a differential drive gear 25 attached to an end portion of countershaft 13, and differential case 20 is caused to rotate around an axis of side gears 22 when final driven gear 19 is caused to rotate by differential drive gear 25.

Additionally, the power on differential case 20 is transmitted, with torque distributed between, to side gears 22 to cause traction wheels 23L, 23R to rotate through drive axles 24L, 24R, causing vehicle 1 to run. It is to be noted that differential housing part 8 includes sidewalls of transmission case 6 which enclose and define a space housing differential device 18.

Moreover, an electric motor 26 as rotary electric machine is provided around the outer periphery of transmission case 6, and this electric motor 26 is attached to a speed reducer case 27 in such a way that it is located in front of differential housing part 8.

Within speed reducer case 27, a speed reducer 28 is provided, and this speed reducer 28 is configured to transmit power from electric motor 26 to final driven gear 19. Speed reducer 28, which is coupled to a rotating shaft 26A to become coaxial with rotating shaft 26A of electric motor 26, is rotatably supported by speed reducer case 27, and has an input shaft 29, whose outer periphery is formed with a sprocket 29A.

Additionally, speed reducer 28, rotatably supported by speed reducer case 27, has an intermediate shaft 30 as an intermediate axis, whose outer periphery is formed with a sprocket 30A having a larger diameter than sprocket 29A and a sprocket 30B having a smaller diameter than sprocket 29A, and sprocket 29A on input shaft 29 is connected to sprocket 30A on intermediate shaft 30 by a chain 32 as a first chain.

Moreover, speed reducer 28, rotatably supported by speed reducer case 27, has an output shaft 31 as an output axis, whose outer periphery is formed with a sprocket 30B having a larger diameter than sprocket 30B, and sprocket 30B on intermediate shaft 30 is connected to sprocket 31A on output shaft 31 by a chain 33 as a second chain.

In addition, the output shaft 31 is removably coupled to an output gear 34, and the output gear 34 is housed in the differential housing part 8 in such a way that it is located in front of and below final driven gear 19. Furthermore, viewing in FIG. 1, the central axis of gear 34 is on the same axis as the central axis of output shaft 31, while the central axis of rotation of final driven gear 19 is on the same axis as the central axis of drive axle 24L.

Moreover, speed reducer case 27 is bent at a location where the intermediate shaft 30 is, and chain 33 extends in a direction intersecting a direction in which chain 32 extends at right angles.

Speed reducer 28 having such a structure is configured to assist power from engine 2 and transmit the assisted power to left and right traction wheels 23L, 23R by allowing differential case 20 to rotate through final driven gear 19 after transmitting rotation of motor 26 to output gear 34 at a reduced speed through chain 32, intermediate shaft 30, chain 33, and output shaft 31.

Furthermore, drive unit 3 according to the present embodiment can improve driving performance of vehicle 1 during high load operation of vehicle 1 because power of engine 2 and power of electric motor 26 are transmitted to left and right traction wheels 23L, 23R. Moreover, this prevents deterioration in driveability of vehicle 1 which would otherwise occur due to interruption of driving force during a shift in transmission 9 from one given gear stage to another given gear stage because transmission of power from electric motor 26 to differential device 18 through speed reducer 28 continues even when transmission of power from engine 2 to differential device 18 is interrupted temporarily.

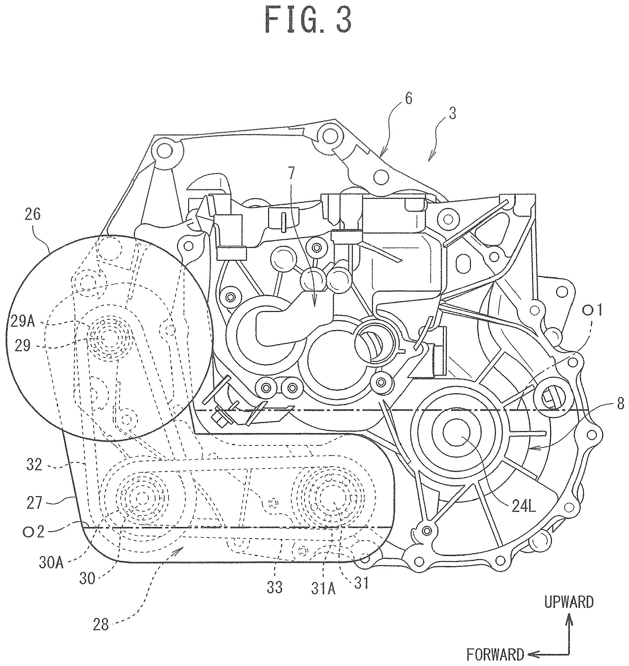

In FIG. 3, oil O1 is enclosed within transmission case 6 and, with this oil O1, transmission 9 and differential device 18 are lubricated. Oil 02 is enclosed within speed reducer case 27 and, with this oil 02, speed reducer 28 is lubricated.

The oil level of oil 02 is set lower than the oil level of oil O1 and the amount of oil O1 enclosed in transmission case 6 is greater than the amount of oil 02 enclosed in speed reducer case 27. This can prevent deterioration in lubricity for transmission 9 and differential device 18 which are larger in size and more in number of parts than speed reducer 28 is.

Moreover, with respect to a transverse direction of the vehicle at differential housing part 8, sidewall 6a of transmission case 6 on the side opposite from the one where engine 2 is located has opening 35 through which output shaft 31 of speed reducer 28 extends. In addition, speed reducer case 27 is attached to sidewall 6a of transmission case 6.

Furthermore, an oil seal 36 is provided between the inner periphery of opening 35 and the outer periphery of output shaft 31 and thus transmission case 6 and speed reducer case 27 are separated from each other in liquid-tight manner.

Moreover, torque transfer case 37 is provided around the outer periphery of drive axle 24R. With regard to sidewalls of transmission case 6 on one and the opposite sides, with respect to the transverse direction of the vehicle at differential housing part 8, torque transfer case 37 is connected to the sidewall 6b of transmission case 6 on the side opposite from the one having opening 35 at a location behind engine 2.

Torque transfer case 37 includes a transfer case housing 38 attached to sidewall 6b of transmission case 6, a hollow gear shaft 39 rotatably supported in transfer case housing 38 and splined to a hollow shaft portion of differential case 20, a bevel gear shaft 40 rotatably supported in transfer case housing 38 and having a gear 40a meshing with a gear 39a formed on the outer periphery of gear shaft 39, and a bevel gear 40b attached to the outer periphery of gear shaft 40 and meshing with an output gear 41a of propeller shaft 41.

This torque transfer case 37 is configured to achieve a four-wheel drive by, after transmitting power from differential device 18 to output gear 41a through gear 39a, gear 40a and bevel gear 40b, transmitting the power to driven side drive axle assembly, not shown, through propeller shaft 41 to power rear wheels through the driven side drive axle assembly. More specifically, vehicle 1 according to the present embodiment 1 is configured to work as a full-time four-wheel drive vehicle.

Additionally, a so-called part-time four-wheel drive may be achieved by moving gear shaft 39 using an actuator in either direction along the axis of drive axle 24R to allow gear 39a of gear shaft 39 to disengage from gear 40a of bevel gear shaft 40 to provide two-wheel drive or to allow gear 39a of gear shaft 39 to mesh with gear 40a of bevel gear shaft 40 to provide four-wheel drive.

Next, effects are explained.

The drive unit 3 according to the present embodiment includes transmission case 6 having transmission housing part 7 which houses transmission 9 and differential housing part 8 which houses differential device 18, transmission case 6 being adapted to be connected to that one end of engine 2 which faces in a transverse direction of vehicle 1 at a location in front of dash panel 1A with respect to the forward direction of vehicle 1, and electric motor 2 is attached to the outer periphery of transmission case in such a way that it is at a location in front of the differential housing part 8.

This prevents electric motor 26 from interfering with such an on-board component as a Mater Vac brake booster 51 or the like on dash panel 1A of vehicle 1, causing an improvement in installing drive unit 3 within vehicle 1.

Moreover, in drive unit 3 according to the present embodiment, with respect to a transverse direction of the vehicle at differential housing part 8, sidewall 6a of transmission case 6 on the side opposite from the one where engine 2 is located has opening 35 through which output shaft 31 of speed reducer 28 extends and speed reducer case 27 is attached to sidewall 6a of transmission case 6, so that it is possible to install speed reducer 28 by getting round the space where such on-board components as torque transfer case 37 and propeller shaft 41 and the like are installed.

In addition to that, installing speed reducer 28 and electric motor 26 to the upper surface of transmission case 6 is not allowed, so that it is possible to install speed reducer 28 to transmission case 6 by getting around such on-board components as a transmission operating device, a gear shifting device and the like which are provided in the proximity of the upper surface of transmission case 6 and attach speed reducer 28 and electric motor 26 to transmission case 6 without any change in the layout of such on-board components as a transmission operating device, a gear shifting device and the like. Therefore, this causes a more effective improvement in installing drive unit 3 to the vehicle.

In addition, if drive unit 3 is applied to a non-hybrid vehicle, speed reducer 28 and electric motor 26 may be easily removed from transmission case 6 by disengaging output shaft 31 of speed reducer 28 from output gear 34 meshing with final driven gear 19 and then pulling output shaft 31 out from opening 35.

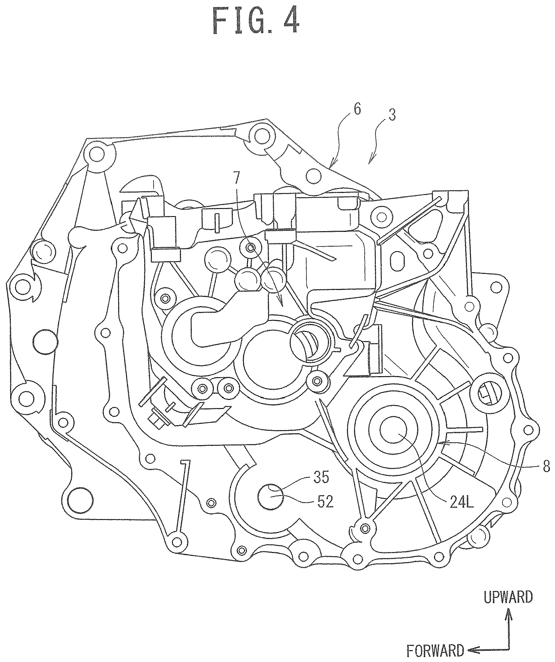

Furthermore, if drive unit 3 is applied to a non-hybrid vehicle, it is no longer necessary to attach a large cover or the like to the outer periphery of transmission case 6 by closing opening 35 of transmission case 6 by a plug or the like as shown in FIG. 4. For this reason, the space for speed reducer 28 may be effectively used if drive unit 3 is installed to the vehicle.

As a result, drive unit 3 according to the present embodiment enables installation of electric motor 26 without significantly remodeling existing drive unit 3 and improvement in installation of drive unit 3 to the vehicle in each of one case when applied to a hybrid electric vehicle and the other case when applied to a non-hybrid vehicle.

Moreover, according to torque transfer case 37 in the present embodiment, with regard to sidewalls of transmission case 6 on one and the opposite sides, with respect to the transverse direction of the vehicle at differential housing part 8, torque transfer case 37 in the present embodiment is connected to the sidewall 6b of transmission case 6 on the side opposite from the one having opening 35 at a location behind, with respect to the forward direction of the vehicle, engine 2, so that it is possible to install speed reducer 28 by getting around the space where such on-board components as torque transfer case 37, propeller shaft 41 and the like are installed. For this reason, electric motor 26 may be attached to transmission case 6, causing a more effective improvement in installing drive unit 3 to the vehicle.

Furthermore, with regard to drive unit 3 according to the present embodiment, Oil O1, O2 is enclosed within each of transmission case 6 and speed reducer case 27, and the oil level within speed reducer case 27 is set lower than the oil level within transmission case 6, so that it is possible to reduce the stirring resistance due to stirring of oil 02 by speed reducer 28 by lowering the oil level within speed reducer case 27 which houses speed reducer 28 as compared to the oil level for such portions as transmission 9 and differential device 18 which require a large amount of oil for lubrication.

Additionally, oil seal 36 is provided at opening 35 to block a flow of oil between transmission case 6 and speed reducer case 27, so that it is possible to prevent the flow of oil O1, O2 between transmission case 6 and speed reducer case 27. This can prevent the stirring resistance by speed reducer 28 from increasing together with preventing a drop in lubricity in transmission 9 and that in differential device 18 caused by outflow of oil O1 contained within transmission case 6 into speed reducer case 27 during turning of the vehicle.

Moreover, speed reducer 28 in the present embodiment includes input shaft 29 connected to rotating shaft 26A of electric motor 26 in such a way that it is coaxial with rotating shaft 26A of electric motor 26, intermediate shaft 30 connected to input shaft 29 through chain 32, and output shaft 31 connected to intermediate shaft 30 through chain 33, and speed reducer case 27 is bent at a location where intermediate shaft 30 is.

This allows for compact installation of speed reducer 28 along sidewall 6a of transmission case 6 even if a path from electric motor 26 to final driven gear 19 is long. This makes it unnecessary to change the layout of on-board components by avoiding a reduction in the installation space for such on-board components within the upper surface of transmission case 6 because speed reducer 28 does not protrude upwards from the upper surface of transmission case 6 as is conventionally done.

It is to be noted that although drive unit 3 according to the present embodiment has used electric motor 26 as the rotary electric machine, an electric motor-generator, which is usable both for an electric motor and a generator, may be used as the rotary electric machine. Furthermore, speed reducer 28 may not comprise chains 32, 33 but it may be constituted by interconnecting electric motor 24 and output gear 34 through reduction gears.

Although an embodiment of the present invention has been described, it will be apparent to person skilled in the art that modifications may be made without departing from the scope of the present invention. All such modifications and equivalents thereof are intended to be covered by the following claims described in scope of claims.

### EXPLANATION OF REFERENCES

- 1: Vehicle
- 1A: Dash panel
- 2: Engine (Internal combustion engine)
- 3: Drive unit
- 6: Transmission case
- 6a, 6b: Sidewall
- 7: Transmission housing part
- 8: Differential housing part
- 9: Transmission
- 18: Differential device
- 19: Final driven gear
- 24L, 24R: Drive axle
- 26: Electric motor (Rotary electric machine)
- 26A: Rotating shaft
- 27: Speed reducer case
- 28: Speed reducer
- 29: Input shaft (Input axis)
- 30: Intermediate shaft (Intermediate axis)
- 31: Output shaft (Output axis)
- 32: Chain (First chain)
- 33: Chain (Second chain)
- 34: Output gear
- 35: Opening
- 36: Oil seal
- 37: Torque transfer case
- 41: Propeller shaft
- O1, O2: Oil

## Claims

1. A drive unit for a hybrid electric vehicle (1), the drive unit (3) including
a transmission (9) which is adapted to change the speed of rotation from an internal combustion engine,
a differential device (18) having a final driven gear (19) to which power from the transmission (9) is transmitted and distributing the power from the transmission (9) to left and right drive axles (24L, 24R),
a transmission case (6) having a transmission housing part (7) which houses the transmission (9) and a differential housing part (8) which is disposed behind, with respect to a forward direction of the vehicle, the transmission housing part (7) and houses the differential device (18), and adapted to be located in front, with respect to the forward direction of the vehicle, of a dash panel and connected to that one end of the internal combustion engine which faces in a transverse direction of the vehicle,
a rotary electric machine (26) provided around the outer periphery of the transmission case (6),
a speed reducer (28) which is housed in a speed reducer case (27) attached to the outer periphery of the transmission case (6) and transmits power from the rotary electric machine (26) to the final driven gear (19),
and
- an output gear (34) which is housed in the differential housing part (8) and meshing with the final driven gear (19), and which is connectable to the output shaft (31) of the speed reducer (28),
- wherein a sidewall (6a, 6b) of the transmission case (6) has an opening (35) through which the output shaft (31) of the speed reducer (28) extends, and wherein the speed reducer case (27) is attached to the sidewall (6a, 6b) of the transmission case (6),
the drive unit (3) for the hybrid electric vehicle being **characterized in**
**that** the output gear (34) is disposed in front, with respect to the forward direction of the vehicle, of the final driven gear (19) and at a lower level, with respect to an upward direction of the vehicle, than the final driven gear (19) is;
**that** the rotary electric machine (26) is provided around the outer periphery of the transmission case (6) in such a way that it is disposed in front, with respect to the forward direction of the vehicle, of the differential housing part (8); and
**that**, with respect to a transverse direction of the vehicle at the differential housing part (8), the opening (35) through which the output shaft (31) of the speed reducer (28) extends is arranged on the sidewall (6a, 6b) of the transmission case (6) on the side opposite from the one where the internal combustion engine is located.

2. The drive unit for the hybrid electric vehicle according to claim 1, **characterized in**
**that** there is provided a torque transfer case (37) for four-wheel drive which transmits power from the differential device (18) to a driven side drive axle assembly through a propeller shaft; and
**that**, with regard to sidewalls (6a, 6b) of the transmission case (6) on one and the opposite sides, with respect to the transverse direction of the vehicle at the differential housing part (8), the torque transfer case (37) is connected to the sidewall (6a, 6b) of the transmission case (6) on the side opposite from the one having the opening (35) at a location behind, with respect to the forward direction of the vehicle, the internal combustion engine.

3. The drive unit for the hybrid electric vehicle according to claim 1 or 2, **characterized in**
**that** oil is enclosed within each of the transmission case (6) and the speed reducer case (27), and the oil level within the speed reducer case (27) is set lower than the oil level within the transmission case (6); and
**that** an oil seal is provided at the opening (35) to block a flow of oil between the transmission case (6) and the speed reducer case (27).

4. The drive unit for the hybrid electric vehicle according to any one of claims 1 to 3, **characterized in**
**that** the speed reducer (28) includes an input shaft (29) connected to a rotating shaft of the rotary electric machine (26) in such a way that it is coaxial with the rotating shaft of the rotary electric machine (26), an intermediate shaft connected to the input shaft (29) through a first chain, and the output shaft (31) connected to the intermediate shaft through a second chain; and
**that** the speed reducer case (27) is bent at a location where the intermediate shaft is.

## Patentansprüche

1. Antriebseinheit für ein Hybrid-Elektrofahrzeug (1), wobei die Antriebseinheit (3) Folgendes umfasst:
ein Getriebe (9), das dazu ausgebildet ist, die von einem Verbrennungsmotor stammende Drehzahl zu ändern,
eine Differentialvorrichtung (18), die ein End-Abtriebsrad (19) aufweist, an das vom Getriebe (9) stammende Leistung übertragen wird und welche die Leistung vom Getriebe (9) auf die linke und rechte Antriebsachsen (24L, 24R) verteilt,
ein Getriebegehäuse (6), das einen Getriebeaufnahmeteil (7), der das Getriebe (9) aufnimmt, und einen Differentialaufnahmeteil (8) aufweist, der in einer Vorwärts-Richtung des Fahrzeugs hinter dem Getriebeaufnahmeteil (7) angeordnet ist und die Differentialvorrichtung (18) aufnimmt, und das derart ausgebildet ist, dass es sich in der Vorwärts-Richtung des Fahrzeugs vor einer Trennwand befindet und mit jenem Ende des Verbrennungsmotors verbunden ist, das in der Querrichtung des Fahrzeugs ausgerichtet ist,
eine am äußeren Umfang des Getriebegehäuses (6) vorgesehene rotierende elektrische Maschine (16),
einen Drehzahlminderer (28), der in einem am äußeren Umfang des Getriebegehäuses (6) befestigten Drehzahlminderergehäuse (27) aufgenommen ist und Leistung von der rotierenden elektrischen Maschine (26) an das End-Abtriebsrad (19) überträgt, und
- ein Ausgangsrad (34), das im Differentialaufnahmeteil (8) aufgenommen ist und mit dem End-Abtriebsrad (19) in Eingriff steht und mit der Abtriebswelle (31) des Drehzahlminderers (28) verbindbar ist,
- wobei eine Seitenwand (6a, 6b) des Getriebegehäuses (6) eine Öffnung (35) aufweist, durch die sich die Abtriebswelle (31) des Drehzahlminderers (28) erstreckt, und wobei das Drehzahlminderergehäuse (27) an der Seitenwand (6a, 6b) des Getriebegehäuses (6) befestigt ist,
wobei die Antriebseinheit (3) für das Hybrid-Elektrofahrzeug **dadurch gekennzeichnet ist, dass**
das Ausgangsrad (34), in der Vorwärtsrichtung des Fahrzeugs, vor dem End-Abtriebsrad (19) und auf einer, in einer Richtung nach oben des Fahrzeugs, niedrigeren Ebene angeordnet ist, als das End-Abtriebsrad (19);
die rotierende elektrische Maschine (26) derart am äußeren Umfang des Getriebegehäuses (6) vorgesehen ist, dass sie, in der Vorwärtsrichtung des Fahrzeugs, vor dem Differentialaufnahmeteil (8) angeordnet ist; und
mit Bezug auf eine Querrichtung des Fahrzeugs am Differentialaufnahmeteil (8), die Öffnung (35), durch die sich die Abtriebswelle (31) des Drehzahlminderers (28) erstreckt, an der Seitenwand (6a, 6b) des Getriebegehäuses (6), auf der dem Verbrennungsmotor gegenüberliegenden Seite angeordnet ist.

2. Antriebseinheit für das Hybrid-Elektrofahrzeug nach Anspruch 1,
**dadurch gekennzeichnet, dass**
ein Drehmoment-Übertragungsgehäuse (37) zum Vierradantrieb vorgesehen ist, das Leistung über eine Antriebswelle von der Differentialvorrichtung (18) an ein abtriebsseitiges Antriebsachsaggregat überträgt; und
im Hinblick auf Seitenwände (6a, 6b) des Getriebegehäuses (6) auf einander gegenüberliegenden Seiten in der Querrichtung des Fahrzeugs am Differentialaufnahmeteil (8), das Drehmoment-Übertragungsgehäuse (37) mit jener Seitenwand (6a, 6b) des Getriebegehäuses (6) verbunden ist, die der Seite gegenüberliegt, auf der sich die Öffnung (35), in der Vorwärtsrichtung des Fahrzeugs, hinter dem Verbrennungsmotor befindet.

3. Antriebseinheit für das Hybrid-Elektrofahrzeug nach Anspruch 1 oder 2, **dadurch gekennzeichnet, dass**
in jedem des Getriebegehäuses (6) und des Drehzahlminderergehäuses (27) Öl eingeschlossen ist und der Ölstand im Drehzahlminderergehäuse (27) niedriger eingestellt ist, als der Ölstand im Getriebegehäuse (6) ist; und
an der Öffnung (25) eine Öldichtung vorgesehen ist, um einen Ölfluss zwischen dem Getriebegehäuse (6) und dem Drehzahlminderergehäuse (27) zu blockieren.

4. Antriebseinheit für das Hybrid-Elektrofahrzeug nach einem der Ansprüche 1 bis 3, **dadurch gekennzeichnet, dass**
der Drehzahlminderer (28) eine Antriebswelle (29), die mit einer rotierenden Welle der rotierenden elektrischen Maschine (26) derart verbunden ist, dass sie mit der rotierenden Welle der rotierenden elektrischen Maschine (26) koaxial ist, eine Zwischenwelle, die über eine erste Kette mit der Antriebswelle (29) verbunden ist, und die Abtriebswelle (31), die über eine zweite Kette mit der Zwischenwelle verbunden ist, umfasst; und
das Drehzahlminderergehäuse (27) an einer Stelle, wo sich die Zwischenwelle befindet, gekrümmt ist.

## Revendications

1. Unité d'entraînement pour un véhicule électrique hybride (1), l'unité d'entraînement (3) comprenant
une transmission (9) apte à modifier la vitesse de rotation provenant d'un moteur à combustion interne,
un dispositif différentiel (18) comportant une roue menée finale (19) à laquelle est transmise une puissance en provenance de la transmission (9) et qui distribue la puissance de la transmission (9) aux axes moteurs gauche et droit (24L, 24R),
un boîtier de transmission (6) comportant une partie de réception de transmission (7) qui abrite la transmission (9) et une partie de réception de différentiel (8) qui est disposée derrière la partie de réception de transmission (7) dans une direction avant du véhicule et qui abrite le dispositif différentiel (18), et adapté de manière à être situé devant un tablier dans la direction avant du véhicule et connecté à l'extrémité du moteur à combustion interne faisant face à une direction transversale du véhicule,
une machine électrique tournante (26) prévue sur une périphérie extérieure du boîtier de transmission (6),
un réducteur de vitesse (28) qui est reçu dans un boîtier de réducteur de vitesse (27) attaché à la périphérie extérieure du boîtier de transmission (6) et qui transmet une puissance de la machine électrique tournante (26) à la roue menée finale (19), et
- une roue de sortie (34) qui est disposée dans la partie de réception de différentiel (8) et est en prise avec la roue menée finale (19) et qui est apte à être connectée à l'arbre de sortie (31) du réducteur de vitesse (28),
- où une paroi latérale (6a, 6b) du boîtier de transmission (6) comporte une ouverture (35) à travers laquelle s'étend l'arbre de sortie (31) du réducteur de vitesse (28), et où le boîtier de réducteur de vitesse (27) est attaché à la paroi latérale (6a, 6b) de la transmission (6),
l'unité d'entraînement (3) pour le véhicule hybride électrique étant **caractérisée en ce que**
la roue de sortie (34) est disposée devant la roue menée finale (19), dans la direction avant du véhicule, et à un niveau inférieur, dans la direction vers le haut du véhicule, à celui de la roue menée finale (19) ;
la machine électrique tournante (26) est prévue sur la périphérique extérieure du boîtier de transmission (6) de telle manière qu'elle est disposée devant la partie de réception de différentiel (8) dans la direction avant du véhicule ; et par rapport à une direction transversale du véhicule au niveau de la partie de réception de différentiel (8), l'ouverture (35) à travers laquelle s'étend l'arbre de sortie (31) du réducteur de vitesse (28), est agencée sur la paroi latérale (6a, 6b) du boîtier de transmission (6) sur le côté faisant face à celui où se situe le moteur à combustion interne.

2. Unité d'entraînement pour le véhicule électrique hybride selon la revendication 1, **caractérisée en ce que**
il est prévu un boîtier de transfert de couple (37) pour un entraînement à quatre roues, qui transmet de la puissance du dispositif de différentiel (18) via une arbre de transmission à un essieu moteur côté mené ; et
en ce qui concerne des parois latérales (6a, 6b) du boîtier de transmission (6) se trouvant sur deux côtés opposés par rapport à la direction transversale du véhicule au niveau de la partie de réception de différentiel (8), le boîtier de transfert de couple (37) est relié à la paroi latérale (6a, 6b) du boîtier de transmission (6) se trouvant sur le côté faisant face à celui comportant l'ouverture (35) en un endroit situé derrière le moteur à combustion interne dans la direction avant du véhicule.

3. Unité d'entraînement pour le véhicule électrique hybride selon la revendication 1 ou 2, **caractérisée en ce que**
chacun parmi le boîtier de transmission (6) et le boîtier de réducteur de vitesse (27) contient de l'huile et le niveau d'huile à l'intérieur du boîtier de réducteur de vitesse (27) est réglé de manière à ce qu'il soit inférieur au niveau d'huile à l'intérieur du boîtier de transmission (6) ; et
un joint étanche à l'huile est prévu au niveau de l'ouverture (35) pour bloquer un écoulement d'huile entre le boîtier de transmission (6) et le boîtier de réducteur de vitesse (27).

4. Unité d'entraînement pour le véhicule électrique hybride selon l'une quelconque des revendications 1 à 3, **caractérisée en ce que**
le réducteur de vitesse (28) comprend un arbre d'entrée (29) connecté à un arbre rotatif de la machine électrique tournante (26) de telle manière qu'il est coaxial avec l'arbre rotatif de la machine électrique tournante (26), un arbre intermédiaire connecté à l'arbre d'entrée (29) via une première chaîne, et l'arbre de sortie (31) connecté à l'arbre intermédiaire via une seconde chaîne ; et
le boîtier de réducteur de vitesse (27) est recourbé en un endroit où se situe l'arbre intermédiaire.
